# EUROPEAN PATENT APPLICATION

(11) **EP 3 988 630 A1**
(43) Date of publication of application: **27.04.2022**
(21) Application number: 20827320.1
(22) Date of filing: 18.06.2020
(51) Int. Cl.: C09K 8/58

(54) **COMPOSITION FOR A METHOD OF OPTIMIZED RECOVERY OF OIL FROM AN UNDERGROUND RESERVOIR AND METHOD OF OPTIMIZED RECOVERY OF OIL FROM AN UNDERGROUND RESERVOIR**

(30) Priority: 19.06.2019 BR 102019012842
(71) Applicant: Universidade Estadual de Campinas, 13083592 Campinas (BR); Repsol Sinopec Brasil S.A., 22250-040 Rio de Janeiro (BR)
(72) Inventor: SABADINI, Edvaldo, 13083-861 Campinas (BR); DE ALMEIDA, Rafael Valladares, 22250-040 Rio de Janeiro (BR); BASSANI, Gabriel Soares, 22250-040 Rio de Janeiro (BR); BERNARDINELLI, Oigres Daniel, 13083-883 Campinas (BR); VILELA, Victor Augusto Licio Garcia, 13083-861 Campinas (BR); DE OLIVEIRA, Luís Fernando Lamas, 13031-870 Campinas (BR); MUÑOZ, Eddy Ruidiaz, 13080-080 Campinas (BR)
(74) Representative: ABG Intellectual Property Law, S.L.
(86) International application number: PCT/BR2020/050217
(87) International publication number: WO 2020/252550

(57) **Abstract**

The present invention pertains to the field of Reservoir Engineering, more particularly to a composition for enhanced oil recovery optimization method and the enhanced oil recovery optimization method comprising the injection of said composition.

Said composition has proven effective in obtaining improved yield in the recovery of oil present in carbonate rocks.

## Description

### Field of the Invention

The present invention pertains to the field of oil reservoir engineering, more particularly refers to aqueous compositions for enhanced oil recovery optimization and the enhanced oil recovery optimization method comprising the injection of said compositions.

Said compositions have proven effective as injector fluids for obtaining an improved recovery of oil present in carbonate rocks.

### Background of the invention

Carbonate Rocks are present in a large fraction of oil reservoir matrices. In the exploitation process, oil production initially occurs spontaneously due to internal pressure driven by reservoir fluids, a method called primary recovery. The method allows the extraction of approximately 5 to 15% of the oil in the reservoir. This factor can be increased by using additional techniques called secondary recovery. The conventional secondary recovery method consists of injecting water or natural gas through wells to maintain reservoir pressure and cause oil to move to producing wells. However, due to parameters such as oil viscosity, and rock wettability and heterogeneity, the fluid's ability to displace the oil is reduced, such that after a given injection time, preferential paths for the injected fluid are established. As a result, oil production decreases while increasing injector fluid production to the extent that the method becomes economically unviable. From this, in order to increase oil extraction, special secondary recovery methods are used, also known as tertiary recovery methods, designated Enhanced Oil Recovery (EOR). Overall, the efficiency of successful enhanced oil recovery methods can be over 60%, although the most frequently reported value in carbonate rocks is 30 to 50% for conventional methods (Thomas, J. E., 2004).

The methods mentioned include, for example, injection of solvents, surfactant solutions and injection of polymer solutions (Rosa A. *et al*, 2006), but none cites the injection of saline solutions (either diluted or not) containing specific cations of copper(II).

In this context, new solutions that increase the oil recovery factor during injection are relevant in view of the low volumes of oil recovered in carbonate reservoirs. The present invention, therefore, refers to the use of aqueous compositions for oil recovery optimization involving solutions with controlled salinity, simulating seawater saline concentration with copper(II) addition, allowing the significant recovery of oil from carbonate rocks.

### State of the art

Some state of the art documents describe oil recovery methods.

The document entitled "RECUPERAÇÃO DE PETRÓLEO POR ÁGUA DE BAIXA SALINIDADE EM CARBONATOS" (Oil Recovery for Low Salinity Water in Carbonates) (2017) evaluates the recovery of oil by injection of seawater with different compositions in secondary and tertiary mode, wherein the most promising results were obtained when seawater with reduced salinity was injected in secondary recovery.

"LOW SALINITY OIL RECOVERY - AN EXPERIMENTAL INVESTIGATION" (2006) discloses that the injection of low salinity water improves the oil recovery.

As can be seen in both documents, oil recovery is related to the effect of diluting seawater. Modified seawater solutions are widely used as injector fluid in methods for enhanced oil recovery. The present invention however discloses that, in order to recover oil in a substantial way, saline solutions were employed (either modified or even pure water alone) with the addition of Cu(II).

RU 2166622 refers to oil recovery methods by injecting an aluminum sulfate (Al(III)) solution at specific concentrations to the reservoir. The present invention uses copper(II) solutions added to seawater, dilute seawater, seawater with absence of some non-reactive ions or even pure water alone.

"USO DE NANOPARTÍCULAS NA RECUPERAÇÃO DE PETRÓLEO" (Use of Nanoparticles in Oil Recovery) however is a review article of studies with different methods focusing on the use of nanotechnology and its benefits for oil recovery, in particular using metallic nanoparticles such as copper and aluminum added in watersoluble polymers to observe the behavior thereof as oil displacing agent. In the case of metallic copper nanoparticles, these are very stable and basically inert, in order not to interact with calcium carbonate, the main component of carbonate rocks. In the present invention, however, free Cu(II) ions in the solution strongly react with the rock's calcium carbonate releasing fractions of oil in contact with the rock.

Finally, US 2019/0023974 deals with an oil recovery composition comprising an aqueous solution of one or more salts present in the saline water with added polymers in order to achieve enhanced oil recovery yields. In the invention the use of Cu(II) is not mentioned. The present invention however deals with the use of Cu(II) solutions and does not use polymers for obtaining better oil recovery yields.

### Brief Description of the invention

Composition for enhanced oil recovery optimization method using aqueous solutions containing copper(II) ion salts, wherein the amount of Cu(II) varies from 8.10⁻⁴ mol L⁻¹ up to 1.6 ×10⁻² mol L⁻¹. The composition of aqueous solutions containing Cu(II) ions are prepared in water, selected from the group consisting of seawater; seawater without NaCl, NaHCO₃ and Na₂SO₄ ions; seawater diluted with pure water; and pure water.

The composition when prepared in seawater diluted with pure water is more than 20 times.

Seawater containing copper(II) salts with a concentration of 8.10⁻⁴ mol L⁻¹.

Method for optimizing enhanced oil recovery, following the sequence:
a) injecting the compositions as defined above in said reservoir;
b) injecting a fluid in said reservoir to direct the saline solutions from step (a) to the production well and
c) recovering oil from the reservoir via production well.

In step (b) said fluid is aqueous solutions, method, in step (c), oil recovery is performed in secondary and/or tertiary recovery mode.

Said reservoir is composed of carbonate rocks of the calcite and/or dolomite type.

There is an increment of 10 to 15% in the recovery of oil with the use of the present invention.

### Brief Description of the figures

To obtain a full and complete visualization of the object of this invention, the figures are presented as referenced, as follows.

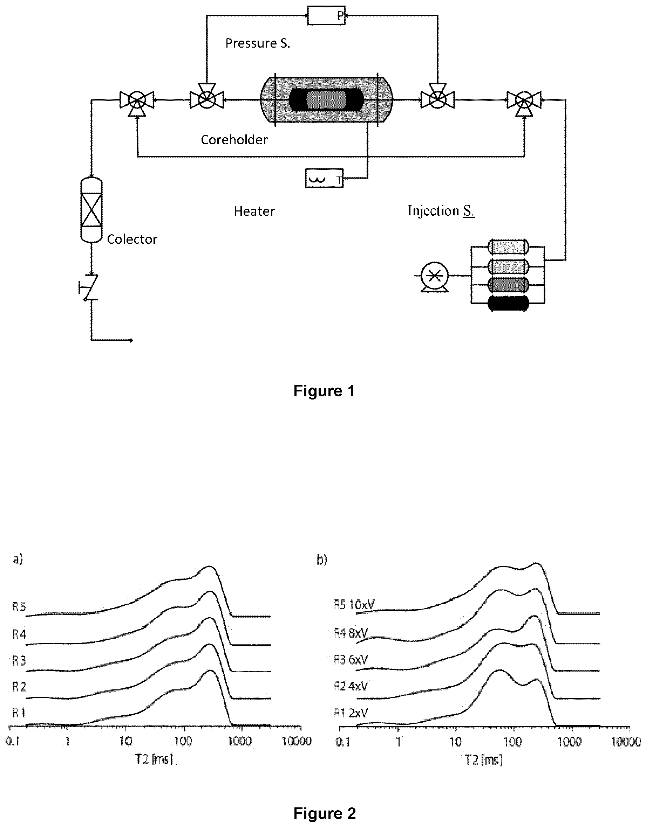

Figure 1 shows the schematic of the device used for oil recovery tests, involving fluid injection system; the injection pump and bottles; sample containment or core holder system; pressure differential collection system during the injection process of each aqueous fraction; and effluent collection system.
Figure 2 refers to the graph with Time-Domain Nuclear Magnetic Resonance measurements, TDNMR, in oil-aged dolomites using a 4 g L⁻¹ CuSO₄.5H₂O solution as injection fluid (corresponding to 1.6 × 10⁻² mol L⁻¹ of Cu(II)). The injected solution volumes shown in the figure correspond to the total pore rock volume, V, (2, 4, 6, 8 and 10V). Figure 2a shows the TDNMR relaxation curves for the five oil-containing dolomite samples and Figure 2b shows the TDNMR relaxation curves for the oil dolomites after the injection of 4 g L⁻¹ CuSO₄.5H₂O solution corresponding to five different volumes injected (2, 4, 6, 8 and 10V).

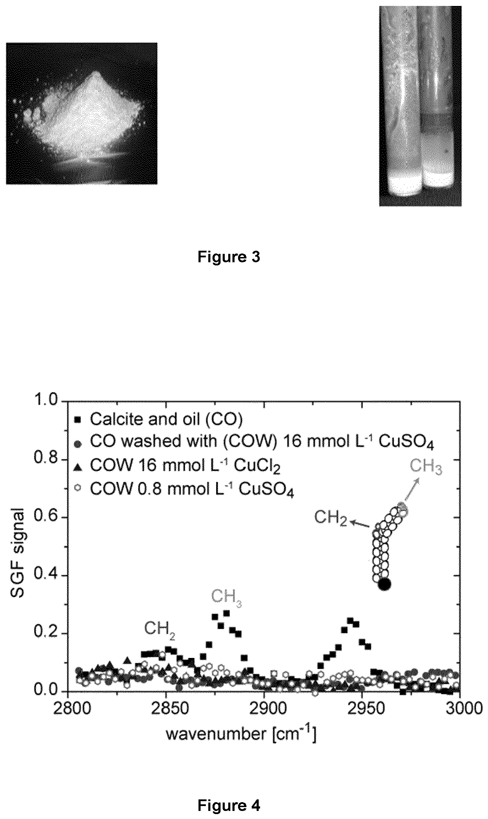

Figure 3 refers to the experiments performed in dolomite powder. The left side of the figure shows a photograph of dolomite powder soaked with oil and water. The right side of the figure shows the oil-soaked powder and a 4 g L⁻¹ solution of CuSO₄.5H₂O in water.
Figure 4 refers to the graph with the Sum Frequency Spectroscopy (SFG) spectrum for calcite crystals with oil deposited on the surface thereof and after washing with aqueous solutions containing the following Cu(II) molar concentrations: 8 × 10⁻⁴ and 1.6 × 10⁻² (at 1.6 × 10⁻² concentration, experiments with CuSO₄.5H₂O and CuCl₂.2H₂O were performed).

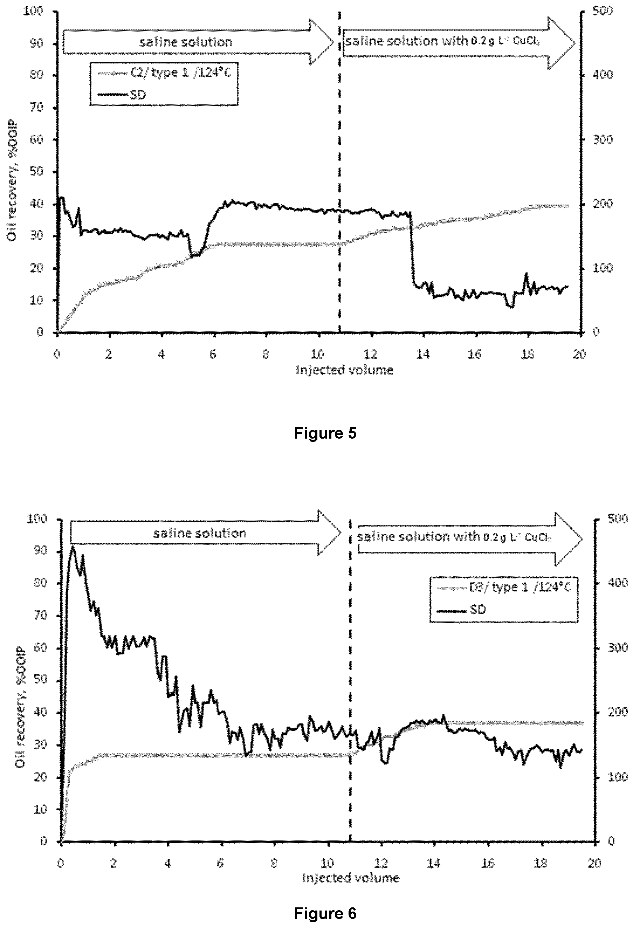

Figure 5 contains the graph representing oil recovery (OOIP% recovery as a function of injected pore volume equivalent) using the equipment described in Figure 1. In the experiment, Type 1 oil in Coquina was used at a temperature of 124 °C. Seawater solution was initially injected as indicated in Table 1. Subsequently, after no more oil was removed, seawater solution (wherein NaCl, NaHCO₃ and Na₂SO₄ salts were removed), containing 0.2 g L⁻¹ CuCl₂ was injected, producing the additional removal of oil shown in the Figure.
Figure 6 contains the graph representing oil recovery (OOIP% recovery as a function of the injected pore volume equivalent) using the equipment described in Figure 1. In the experiment, Type 1 oil in Dolomite at a temperature of 124 °C was used. Initially, seawater solution was injected as indicated in Table 1. Subsequently, after no more oil was removed, seawater solution (wherein NaCl, NaHCO₃ and Na₂SO₄ salts were removed) containing 0.2 g L⁻¹ CuCl₂ was injected, producing the additional removal of oil shown in the Figure.

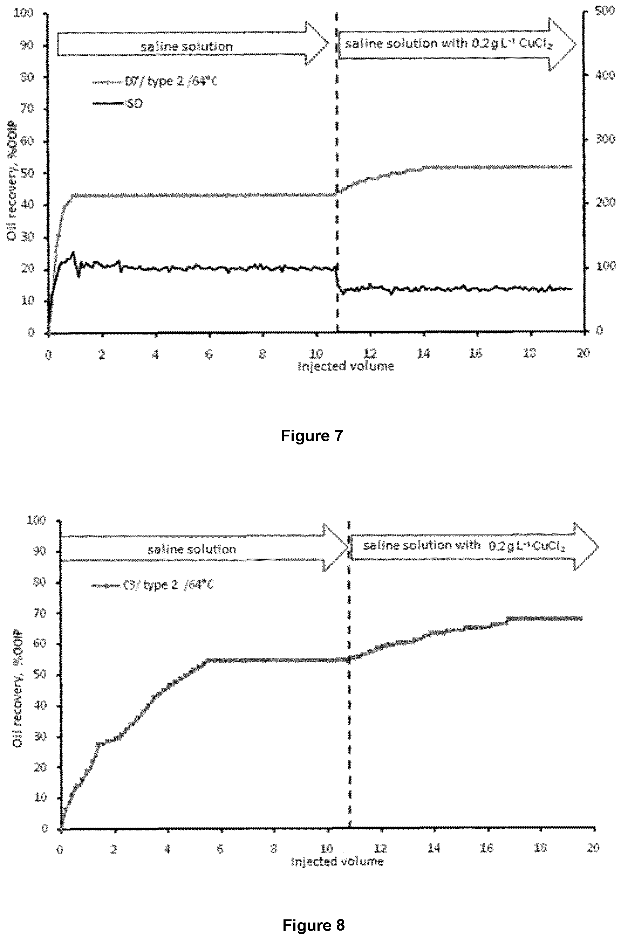

Figure 7 contains the graph representing oil recovery (OOIP% recovery as a function of the injected pore volume equivalent) using the equipment described in Figure 1. In the experiment, Type 2 oil in Coquina was used, at a temperature of 64 °C. Initially, seawater solution was injected, as shown in Table 1. Subsequently, after no more oil was removed, seawater solution (wherein NaCl, NaHCO₃ and Na₂SO₄ salts were removed) containing 0.2 g L⁻¹ CuCl₂ was injected, producing the additional removal of oil shown in the Figure.
Figure 8 contains the graph representing oil recovery (OOIP% recovery as a function of the injected pore volume equivalent) using the equipment described in Figure 1. In the experiment, Type 2 oil in Dolomite was used, at a temperature of 64 °C. Initially, seawater solution was injected as shown in Table 1. Subsequently, after no more oil was removed, seawater solution (wherein NaCl, NaHCO₃ and Na₂SO₄ salts were removed) containing 0.2 g L⁻¹ CuCl₂ was injected, producing the additional removal of oil shown in the Figure.

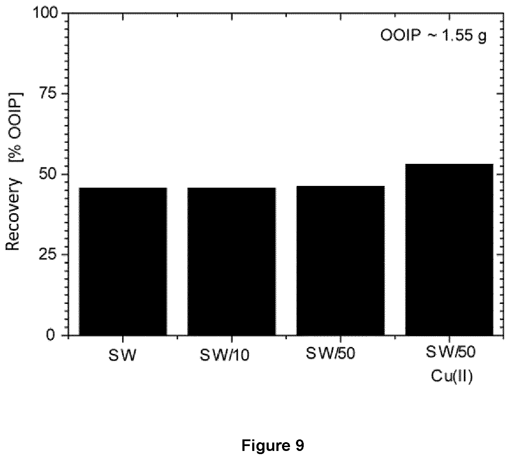

Figure 9 presents the graph with recovery of type 1 oil in dolomite using saline solutions that simulate seawater (SW) and seawater 10-fold diluted with pure water (SW/10); 50-fold diluted (SW/50); and SW/50 containing 0.2 g L⁻¹ CuCl₂.2H₂O.

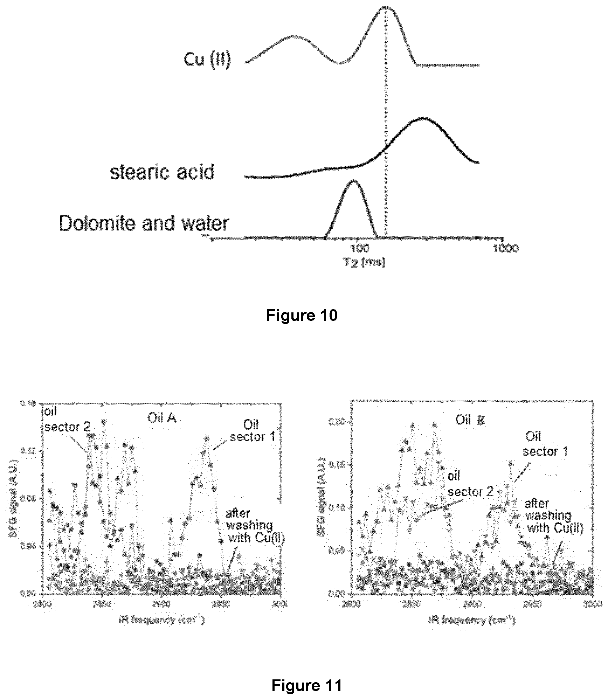

Figure 10 represents the spin-spin relaxation times obtained in the TDNMR, T2 experiments for calcite powder impregnated only with water (below); impregnated with stearic acid, which was used as a model molecule to represent a certain fraction of the oil (middle graph); and for calcite powder impregnated with stearic acid but washed with saline solutions containing 4 g L⁻¹ CuSO₄.5H₂O (above).
Figure 11 shows sum frequency (SFG) spectra of two calcite samples that were coated with two types of oils (A and B), obtained at two different points in the samples. Next, spectra were obtained from the same samples that were washed with seawater containing Cu(II) ions.

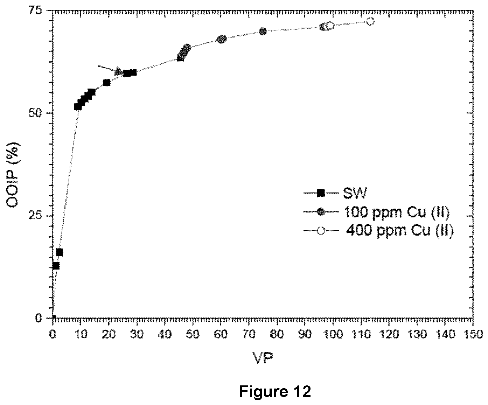

Figure 12 shows a graph of percentage of oil recovered (in OOIP%) as a function of the number of pore volumes injected for a pre-salt sample containing incorporated pre-salt oil. Initially, the swept is composed of seawater (SW) and later with seawater containing Cu(II) ions. The arrow indicates the point on the diagram wherein seawater with Cu(II) was added, where an increase of 8.9% was achieved. The addition of a higher Cu(II) concentration does not result in additional oil production.

### Detailed Description of the invention

The present invention refers to the use of aqueous solutions containing Cu(II) used in an optimization method for the recovery of oil in carbonate reservoirs.

Said compositions comprise saline solutions containing Cu(II) ions, produced by different copper(II) salts, such as chlorides, sulfate and others. Said saline solutions consist of seawater or seawater diluted with pure water, preferably 50 times, or even pure water, containing a specific concentration of Cu(II) ions.

Additionally, Cu(II) ions used in the present invention are in amounts ranging from a certain minimum value 8.10⁻⁴ mol L⁻¹ up to 1.6 ×10⁻² mol L⁻¹. The increase of Cu(II) ion concentration results in the increase in the amount of oil removed.

Said saline solutions are injected into oil reservoirs comprising carbonate rocks, wherein said carbonate rocks mainly comprise calcites and/or dolomites.

Said compositions have proven surprising, optimizing the method for oil recovery. As a demonstration of the optimization process, in the displacement experiments performed in the core-holder system, recovery increments of the order of 13 OOIP% were obtained after substitution of seawater injector fluid by seawater solutions (without NaCl, NaHCO₃ and Na₂SO₄ ions), containing copper(II) ion concentrations of 8 × 10⁻⁴ mol L⁻¹ (figures 5 to 8).

In addition, a method for optimizing oil recovery is provided, comprising:
a) injecting, the composition comprising saline solutions containing Cu(II) ions as defined above, in said reservoir;
b) transferring the fluids from the reservoir to the production well, and
c) recovering oil from the reservoir via the production well.

The oil recovery step (step (c)) is started. In this step, the addition of copper Cu(II) ions to the injector fluid for oil recovery can occur either by secondary recovery or tertiary recovery or both.

In order to demonstrate the efficiency of recovery, the present invention will be illustrated by presenting the results wherein different analysis techniques such as Time Domain Nuclear Magnetic Resonance (TDNMR), sum frequency spectroscopy (SFG) and forced displacement of fluids on an oil recovery bench were used. The set of results obtained by the use of these techniques shows the positive effect of the presence of Cu(II) ions in aqueous solutions, resulting in improved oil recovery.

### Preparation of the Solutions

Saline solutions (either diluted or not with pure water) containing Cu(II) were used to promote the recovery of oil contained in the rocks. Therefore, in the tests, basically two types of saline solutions were prepared to evaluate the effects of Cu(II) ions. Saline solutions were prepared to simulate seawater saline concentration as shown in Table 1. Experiments were also performed wherein some non-reactive seawater ions were removed (NaCl, NaHCO₃ and Na₂SO₄) or seawater was diluted at some factors with pure water. In the investigated saline solutions, Cu(II) ions were added to evaluate the specific effect of this ion on the removal capacity of oil impregnated in the rocks. Table 1 shows the composition of the synthetic seawater solution (SW, seawater), and the corresponding solution containing seawater with the removal of NaCl, NaHCO₃ and Na₂SO₄ ions and the addition of copper(II) ions. These two solutions were used in the displacement experiments using core-holder (described in [48]).

**Table 1. Chemical composition of the evaluated waters.**

| Salts | SW*, (g L⁻¹) | SW(CuCl₂)**, (g L⁻¹) |
|---|---|---|
| NaCl | 23.472 | 0 |
| CaCl₂×2H₂O | 1.467 | 1.467 |
| NaHCO₃ | 0.193 | 0 |
| MgCl₂×6H₂O | 10.551 | 10.551 |
| Na₂SO₄ | 3.917 | 0 |
| KCI | 0.725 | 0.725 |
| SrCl₂×6H₂O | 0.039 | 0.039 |
| CuCl₂ | 0 | 0.2 |

| | | |
|---|---|---|
| *SW = synthetic seawater **SW (CuCl₂) = synthetic seawater wherein NaCl, NaHCO₃ and Na₂SO₄ ions were removed, but with addition of copper(II) ions, thus avoiding the formation of copper(II) salt precipitates. | | |

A magnetic stirrer and thermal heating (40 °C) were used to prepare the solutions. Salts were added in decreasing order of mass: 1. NaCl, 2. MgCl₂, 3. Na₂SO₄, 4. CaCI2, 5. KCI, 6. CuCl₂ (when present),7. NaHCO₃ and 8. SrCI2. The solutions were then stirred for 120 minutes to ensure system homogeneity and complete dissolution of salts.

### Preparation of samples

The carbonate used in the core-holder displacement tests are formed by calcite (CaCO₃) and dolomite [CaMg (CO₃)₂]. The outcrops obtained are of the Coquina and Dolomite Type. The oil samples used were: type 1 and type 2. The properties of the two oil types used are shown in Table 2.

**Table 2. Properties of type 1 and 2 oils**

| Measurements at atmospheric conditions (20 °C, 14.7 psi) | | | |
|---|---|---|---|
| | **Density (g/mL)** | **Viscosity (CP)** | **Total Acid number (TAN g oil/mg KOH)** |
| **Type 1 oil** | 0.855 | 14.66 | 1.3155 |
| **Type 2 oil** | 0.8736 | 57.17 | 0.044 |

Samples were prepared by incorporating the oil fraction (oil), directly or, in the displacement experiments using the core-holder, as follows. In the displacement experiments using the core-holder (Figure 1), the rock samples were prepared in the condition of irreducible water saturation (Swᵢ) using water from formation of two carbonate reservoir fields of the Brazilian Pre-salt and their respective samples of oil (type 1 and 2). After the saturation process, rock samples were properly aged for two weeks in an oven heated at 124 °C.

### Time-Domain Nuclear Magnetic Resonance experiments (TDNMR)

Time Domain Nuclear Magnetic Resonance (TDNMR) studies are based on the determination of the spin-spin relaxation time designated by T₂, related to the hydrogen atoms of the aqueous phase and oil molecules contained in the pores of the rocks. Thus, the fractions of each phase can be determined and the efficiency of the injected fluids capable of displacing the rock oil evaluated. The experiments were performed on a 20 MHz Bruker mini-spin NMR spectrometer. The ability to recover oil by passing saline solutions through the rocks using saline solutions containing Cu(II) ions has been evaluated.

For the time domain NMR experiments, the rocks (dolomites) were cut into cylindrical plugs of 7 mm in diameter and approximately 12 mm in length in order to fit in the TDNMR probe. After cutting, the rocks were cleaned using running water and then heat-treated to remove organic components that were not removed by washing. Then the rocks were saturated with oil. In this process, the rocks were initially vacuumed at 10 mBar pressure for 5 hours to allow air to be removed from the pores letting them available for oil penetration. After the vacuum, oil was inserted with the aid of a piston connecting the system to an oil container so that it can penetrate the pores of the rocks. Rock plugs were kept submerged in oil for 24 hours for maximum sample saturation.

Figure 2a shows the distributions of T₂ signals in dolomite samples when saturated by oil in five different rocks. The oil fraction has a T₂ value different from that of aqueous fraction. Thus, it is possible to verify the effects of extraction.

In T₂ distributions, the oil behavior inside the rocks before aqueous injections is basically the same. Figure 2b shows the results of the injection of the aqueous solution containing 4 g L⁻¹ CuSO₄.5H₂O into the oil-saturated rocks. As noted, with the injection of this solution, a change occurs in the patterns of T₂ distributions. This occurs because the aqueous phase occupies the pores of the dolomite expelling the oil, characterizing an increase in the signal intensity of the aqueous phase that is observed in longer relaxation times. In the case of these experiments, the effects of Cu(II) on the wettability variation of the rock containing oil was performed by comparing the experiments wherein only pure water was injected. From these experiments, it has been concluded that the wettability of the rock by the aqueous phase increased with the injection of solutions containing Cu(II). Therefore, the positive effect caused by this ion on the wettability increase of oil-containing rocks by the aqueous phase is evident. Furthermore, in this experiment, copper sulfate instead of copper chloride (used in the core-holder displacement experiment) was used. As both oil removal results were positive, it can be concluded that the oil removal process is independent of the copper salt used (chloride or sulfate).

### Wettability

In order to visually demonstrate how the Cu(II) ion-containing solution alters the oil wettability of carbonate and the resulting oil recovery, a dolomite sample was ground and a grain fraction thereof was impregnated with oil and placed in contact with pure water (left tube) and with the solution containing 4 g L⁻¹ CuSO₄.5H₂O (right tube) (Figure 3).

Oil separation from the surface of the dolomite is clearly visible upon contact with the copper(II) ion solution, i.e. the oil is removed from the surface of the dolomite when in contact with the aqueous solution containing 4 g L⁻¹ CuSO₄.5H₂O. This fact does not occur when the sample comes into contact with pure water or saline without the presence of copper(II) ions.

### Sum Frequency Generation Spectroscopy SFG

Interactions of oil with rock interfaces have been studied using Sum Frequency Generation (SFG) spectroscopy. This technique obtains a signal with the sum of frequencies of two overlapping incident beams, in a selective process to medium where there is no inversion symmetry, as in the case of interfaces. Applying one excitation beam to the visible region and one tunable in the middle infrared, SFG spectroscopy provides a vibrational spectrum of the interface and allows the study of the arrangement and orientation of the molecular groups and even the complete removal of the oil phase. Given the high sensitivity of the technique, the removal ability until the last layer of oil in contact with the rock by washing the surface with saline solutions containing Cu(II) ions was evaluated.

The surface of calcite crystals was impregnated with oil and subsequently the infrared spectra between 2800-3000 cm⁻¹ was obtained, which may indicate vibrational modes of CH₂ and CH₃ groups present in the oil molecules at the interface with calcite. Figure 4 shows the SFG results obtained from oil-impregnated calcite crystals subjected to a washing process using aqueous solutions containing Cu(II) ions prepared with two Cu(II) salts: CuSO₄.5H₂O (at two different concentrations) and CuCl₂.2H₂O. When the calcite crystal surface is impregnated with oil, in the region between 2800-3000 cm⁻¹, the vibrational modes of CH₂ and CH₃ are observed. However, when that same crystal is washed by a solution containing Cu(II) ions at a minimum concentration of 0.8 mmol (corresponding to 0.2 g L⁻¹ CuSO₄.5H₂O), or with the aqueous solution of CuCl₂.2H₂O, oil removal is observed due to the disappearance of the vibrational modes (CH₂ and CH₃) in the spectral region between 2800-3000 cm⁻¹, that is, until the last oil monolayer of the calcite crystal surface has been removed. It has been noted that the increase in Cu(II) concentration is proportional to the efficiency of the oil monolayer removal. In another experiment, it has been observed that the oil layer is not removed when washed only with synthetic seawater (composition described in Table 1). This experiment shows that Cu(II) ion is the responsible for the removal of the oil. It has also been observed that 0.8 mmol L⁻¹ (0.2 g L⁻¹ CuSO₄.5H₂O is the minimum Cu(II) concentration that achieves oil removal from the calcite surface.

In addition to the TDNMR and Sum Frequency (SFG) experiments, forced displacement experiments were performed to evaluate the potential oil recovery in rocks by simulating current reservoir conditions (Core-Holder Displacement).

### Core-Holder Displacement

In the displacement experiments, the apparatus as shown in Figure 1 was used. During the experiments, techniques of porous media preparation with water and oil were used to reproduce a reservoir environment and thus evaluate the recovery potential of saline solutions containing Cu(II) ions. The apparatus shown in Figure 1 allows the recovery potential to be measured under specific pressure, temperature and flow rate conditions. Figure 1 shows the bench components that consist of the fluid injection system; the injection pump and bottles; sample containment or core-holder system; pressure differential collection system during the injection process of each aqueous fraction; the last system is the effluent collection system that allows collecting fluids produced during each stage of the experiment.

In this sense, four recovery experiments were performed to test the effect of an aqueous solution simulating seawater (wherein NaCl, NaHCO₃ and Na₂SO₄ ions were removed) and containing 0.2 g L⁻¹ CuCl₂.2H₂O. This concentration was used, taking as reference the minimum values of Cu(II) used for oil removal, determined by SFG experiments. The rocks used as reservoir models were of two types: coquina and dolomite. These were properly prepared under the condition of 10% irreducible water saturation.

The wettability restoration process consisted of placing the rocks individually in steel cells immersed in saturation oil. These cells were properly closed and placed for at least 15 days in an oven heated at 124°C for aging and thus reproduce a wettability condition produced by the adsorption of polar components present in the oil (Ruidiaz, 2015).

These experiments aim at obtaining data for raising oil recovery curves as a function of injected pore volumes. In these experiments, the displacement of oil by seawater in the secondary mode was evaluated, followed by modified seawater (without NaCl, NaHCO₃ and Na₂SO₄ ions) with copper chloride in tertiary mode. A device was used to allow the collection of effluents (oil and water) as well as the differential pressure caused by the rock characteristics and fluids used.

Thus, to perform the recovery experiment, the first step involved circuit assembly and leak assessment and the proper operation of all components. Then, a rock is mounted on the core-holder, which in turn is heated at temperatures of 64 °C or 124 °C. The confinement system is supported by an injection pump that maintains a pressure of 1000 psi until core-holder temperature stabilizes.

Subsequently, saline water is injected simulating sea salt concentrations at a flow rate of 0.1 mL/min through the bypass circuit to establish a continuous flow condition and perform the pore pressure raise which remained constant in all experiments at 500 psi.

Oil recovery obtained from oil-containing carbonate rock experiments are shown in Figures 5 to 8. As shown in Figure 5, the percentage of recovered oil reached 27.42 OOIP% for coquina rock, while for dolomite (Figure 6) it was 26.87 OOIP% during injection of seawater alone.

These recovery values are representative for this type of carbonate rock studied under more extreme pressure conditions (Klinger *et al.* 2018).

In addition, following the situation where seawater injection no longer resulted in oil recovery (i.e., as observed in the first plateau), the introduction of modified seawater (without NaCl, NaHCO₃ and Na₂SO₄ ions) in the composition containing Cu(II) significantly improved oil recovery (Figures 5 to 8).

With the injection of seawater containing Cu(II) ions at minimum concentrations, the percentages of recovered type 1 oil increased by 9.53 OOIP% for dolomite and 12.07% for Coquina, achieving 36.94% and 38.94% recoveries, respectively.

Also, in experiments performed with type 2 oil-containing coquina and dolomite rocks, there were higher recoveries compared to those obtained with type 1 oil. Figures 5 and 8 show the type 2 oil percentages obtained by injecting seawater in secondary mode, reaching 54.41 OOIP% plateaus for coquina rock (Figure 7), while for dolomite (Figure 8) 42.93 OOIP% has been reached.

Injection of Cu(II) ion-containing solution in tertiary mode was admitted shortly after stabilization of seawater production (after the plateau). Increases in oil production caused by the injection of seawater with Cu(II) ions were 13.06 OOIP% for coquina rock and 8.60 OOIP% for dolomite rock, achieving 67.47% and 51.53% recoveries, respectively. These values are significantly higher than those found in the state of the art with these types of carbonate rocks, demonstrating the great potential that this fluid has for oil recovery.

Table 3 presents a summary of the tests performed, with their respective values of increase in Oil Recovery (AFRO (%)) due to Cu(II) ion-containing fluid injection.

**Table 3. Summary of production increments for each test**

| **Oil** | **Rock** | **ΔFRO (%)** | **Figure** |
|---|---|---|---|
| Type 1 | Coquina | 12.07% | 5 |
| Type 1 | Dolomite | 9.53% | 6 |
| Type 2 | Coquina | 13.06% | 7 |
| Type 2 | Dolomite | 8.60% | 8 |

In addition, Figure 9 shows the percentage of oil recovery using another Cu(II) ion experiment. This is a miniaturized experiment with respect to the core holder described earlier. The experiments described in the displacement tests made use of synthetic seawater in the absence of NaCl, NaHCO₃ and Na₂SO₄. However, it is known that the removal of specific non-reactive ions may improve oil recovery (Fathi *et al.* 2010). Thus, to show that oil removal is indeed caused by Cu(II) ions, new experiments with seawater injection (SW) were performed, followed by the 10-fold- (SW/10) and subsequently 50-fold (SW/50) dilution of seawater injection. In these experiments, solutions were initially injected without the presence of Cu(II) ions, always expecting for a recovery plateau, so that another injection could then be undertaken. Following the injection of these saline solutions, another step was followed by injecting a 50-fold dilute synthetic seawater solution (SW/50) containing 0.2 g L⁻¹ copper chloride. It was observed that with the injection of SW/50 containing 0.2 g L⁻¹ copper chloride an improvement in oil recovery around 7% was obtained. This result demonstrates that the effect of additional oil removal is caused by Cu(II) ions and not by the removal of nonreactive ions (NaCl, NaHCO₃ and Na₂SO₄).

Finally, to demonstrate wettability changes in carbonate samples, nuclear magnetic resonance techniques, contact angle experiments and sum frequency generation (SFG) experiments were used in order to verify the interaction of the rock in contact with oil after washing with concentrated Cu(II) ions solutions.

Contact angle experiments were performed, wherein calcite crystal samples were initially coated with stearic acid (model molecule to represent aliphatic fractions with polar oil groups) were impregnated with solutions containing 4 g L⁻¹ CuSO₄.5H₂O for 4 days. After this treatment, contact angle experiments were performed depositing a small drop of water on the treated crystal, in order to verify a possible modification on the calcite crystal surface. The smaller the contact angle, the more efficient the removal of the hydrophobic layer (stearic acid), because the surface became more hydrophilic. Therefore, observing the surface in contact with Cu(II) ion solution, the complete wettability of the surface by water was observed, indicating that at a 4 g L⁻¹ concentration, the complete removal of stearic acid occurs.

Another experiment conducted applied time-domain nuclear magnetic resonance to investigate the efficiency of removal of calcite powder-impregnated stearic acid by subsequent washing with saline solutions containing Cu(II) ions. After the immersion process, the powder was hydrated with ultra-pure water and T₂ distributions were verified. The distribution of transverse relaxation times T₂ reflects changes in wettability. The smaller the T₂ distribution value, the more water-wettable the surface, which is an indicator directly related to the removal of oil components. Again, as shown in Figure 10, the higher wettability is obtained for stearic acid-impregnated samples and washed with Cu(II) solution.

Based on the set of results obtained from the different experiments, it can be concluded that aqueous solutions (which may be: seawater, or seawater without ions such as NaCl, NaHCO₃ and Na₂SO₄, or seawater diluted with pure water, or even pure water), but containing Cu(II) ions from different possible copper(II) salts, are able to significantly improve the recovery capacity of oil present in carbonate reservoirs.

Those skilled in the art will value the knowledge presented herein and may reproduce the invention in the presented embodiments as well as other variants, covered by the scope of the appended claims.

### References:

1- Thomas, Jose Eduardo. Fundamentos de engenharia de petroleo. 2ed. Rio de Janeiro: Interciência,2004.
2- Andrade, Ana Beatriz Cabral. Recuperação de petroleo por água de baixa salinidade em carbonatos. Campinas,SP: [s.n], 2017.
3- Larger, A. et a/., Low Salinity Oil recovery - An experimental investigation. Petrophysics - February 2008.
4- Sa, Anna Beatriz Garcia Trajano et a/., Uso de nanopartículas na recuperação de petroleo. III Congresso Nacional de Engenharia de petroleo, gas natural e biocombustíveis. V Workshop de engenharia de petroleo.
5- Rosa, Adalberto Jose, Renato de Souza Carvalho, and Jose Augusto Daniel Xavier. Engenharia de reservatórios de petróleo. Interciência, 2006.
6- Klinger. Oswaldo, Peralta. Andrés, Ruidiaz. Eddy, Trevisan. Osvair. OIL RECOVERY IN CARBONATE RESERVOIR ROCKS BY REDUCING TOTAL SALINITY IN INJECTION WATER FOR CORE FLOODING TESTS. Rio Oil & Gas Expo and Conference 2018, held between 24 and 27 of September, in Rio de Janeiro.
7- Ruidiaz, Muñoz Eddy - Estudo da Alteração da Molhabilidade de Carbonatos com Injeção de Água e CO2, Tese de Doutorado, UNICAMP, 2015.
8- Fathi SJ, Austad T, Strand S (2010) "Smart Water" as a wettability modifier in chalk: the effect of salinity and ionic composition, Energy Fuels 24 (4): 2514-2519.)

The Certificate of Addition, inserted in the same technological field, refers to the use of an aqueous solution containing Cu(II) used in an optimization method in the recovery of oil in carbonate reservoirs.

As a complement to the tests already carried out and as a way to further reinforce the results obtained in the recovery of oil, a concentration of Cu(II) ions in seawater capable of extracting a greater volume of oil from carbonate rocks is presented.

Cu(II) ions in aqueous solutions are capable of removing up to the boundary layer, which is directly in contact with the surface of the carbonate rock. Thus, the surface wettability of the carbonate is altered, resulting in additional oil recovery, in a situation where seawater is no longer able to remove it. This result is shown in Figure 11, wherein the Sum Frequency Generation (SFG) technique was applied, which is capable of detecting the oil layer directly in contact with the calcite surface (last oil layer).

Measurements were performed on two sectors of the calcite surface with two different types of oils (A and B). Signals referring to the vibrational modes of the molecules of the two oils appear in the sampled region. However, when washing the samples with seawater containing Cu(II), the signals related to the oil molecules disappear completely. This result demonstrates the great ability of Cu(II) ions to displace oil from the surface of calcite.

Displacement experiments of pre-salt carbonate samples were carried out wherein oil was incorporated, following all protocols. Initially, formation water was inserted, followed by the incorporation of oil and subsequent aging of the sample. Then, seawater was injected through a core-holder, until the amount of oil recovered was close to the maximum plateau (Figure 12). Next, a solution containing 3.2 . 10⁻³ mol.L⁻¹, equivalent to 400 ppm, Cu(II) in seawater, was prepared resulting in the precipitation of carbonate naturally present in seawater. This procedure results in the removal of carbonate and bicarbonate from seawater. The solution is then filtered to eliminate precipitates and is then injected through the rock that has been previously flushed by seawater. As shown in Figure 2, there is an additional increase in the oil recovered, showing the positive effect of oil recovery by Cu(II) ions. In the results presented, an additional recovery of about 8.9% was obtained.

The results demonstrate the ability to additionally remove (after seawater injection) oil from carbonate samples by the presence of Cu(II) ions in seawater.

This Certificate of Addition presents the optimum addition concentration of Cu(II) ions at 3.2. 10⁻³ mol.L-⁻¹, equivalent to 400 ppm, in seawater. Additionally the method related to the addition of this Cu(II) solution to have an effect on oil recovery is also revealed, being based on the use of excess Cu(II) to eliminate the carbonate fractions (naturally present) by precipitation. Thus, the same ion that results in additional oil recovery removes carbonate ions, which could result in precipitation with Cu(II). After filtering the seawater with copper (already with the carbonates removed) the solution is injected to promote the recovery of the oil fraction. The preferred amount of Cu(II) is 3.2. 10⁻³ mol.L⁻¹, equivalent to 400 ppm, but this amount can be easily adjusted depending on the amount of carbonates/bicarbonates present in seawater.

## Claims

1. . Composition for enhanced oil recovery optimization method, **characterized in that** it comprises aqueous solutions containing copper(II) ion salts, wherein the amount of Cu(II) ranges from 8.10⁻⁴ mol L⁻¹ to 1.6 ×10⁻² mol L⁻¹.

2. Composition according to claim 1, **characterized in that** the aqueous solutions containing Cu(II) ions are prepared in water, selected from the group consisting of seawater; seawater with no NaCl, NaHCO₃ and Na₂SO₄ ions; seawater diluted with pure water; and pure water.

3. Composition according to claim 1, **characterized in that** it comprises an aqueous solution containing copper(II) ion salts, wherein the preferred amount of Cu(II) is 3.2.10⁻³ mol L⁻¹.

4. Composition according to claim 2, **characterized in that** it comprises an aqueous solution containing copper(II) salts, wherein the amount of Cu(II) ranges from 8.10⁻⁴ mol L⁻¹ up to 1.6 ×10⁻² mol L⁻¹, wherein said solution is prepared in seawater diluted with pure water, more than 20 times.

5. Composition according to claim 2, **characterized in that** it comprises seawater containing copper(II) salts, wherein the amount of Cu(II) to be used is 8.10⁻⁴ mol L⁻¹.

6. Enhanced oil recovery optimization method, **characterized by**:
(a) injecting the composition, according to claims 1 to 5, in said reservoir;
(b) injecting a fluid into said reservoir to direct the saline solutions from step (a) to the production well, and
(c) recovering oil from the reservoir via the production well.

7. Method according to claim 6, **characterized in that** in step (b) said fluid is an aqueous solution.

8. Method according to claim 6, **characterized in that** in step (c) the oil recovery is performed in secondary and/or tertiary recovery mode.

9. Method according to claim 6, **characterized in that** said reservoir comprises carbonate rocks.

10. Method according to claim 9, **characterized in that** said carbonate rocks comprise calcites and/or dolomites.

11. Method according to claims 6 to 10, **characterized by** an oil recovery increment of 10 to 15%.
